**Europäisches Patentamt**

(19) **European Patent Office**

**Office européen des brevets**

(11) Numéro de publication : **0 191 710 B1**

# (12) FASCICULE DE BREVET EUROPEEN

(45) Date de publication du fascicule du brevet :
08.01.92 Bulletin 92/02

(51) Int. Cl.⁵ : **B62K 25/02, B60B 27/02**

(21) Numéro de dépôt : **86450002.0**

(22) Date de dépôt : **10.01.86**

(54) **Bicyclette perfectionnée.**

(30) Priorité : **11.01.85 FR 8500674**
**11.01.85 FR 8519460**

(43) Date de publication de la demande :
**20.08.86 Bulletin 86/34**

(45) Mention de la délivrance du brevet :
**08.01.92 Bulletin 92/02**

(84) Etats contractants désignés :
**AT BE CH DE FR GB IT LI LU NL SE**

(56) Documents cités :
**FR-A- 1 388 952**
**FR-A- 2 340 830**
**FR-A- 2 352 225**
**US-A- 2 018 973**

(73) Titulaire : **Alvarez, Michel**
**Calle Escuelas, 12 3 D**
**E-17412 Massanet de la Selva (ES)**
Titulaire : **Barrau, Carmen**
**Calle Escuelas, 12 3 D**
**E-17412 Massanet de la Selva (ES)**

(72) Inventeur : **Alvarez, Michel**
**Calle Escuelas, 12 3 D**
**E-17412 Massanet de la Selva (ES)**
Inventeur : **Barrau, Carmen**
**Calle Escuelas, 12 3 D**
**E-17412 Massanet de la Selva (ES)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 191 710 B1

Jouve, 18, rue Saint-Denis, 75001 PARIS

## Description

La présente invention a pour objet une bicyclette a blocage des roues par empreintes avec roue libre exterieure au cadre.

On sait que la roue libre de toute bicyclette est montée à l'intérieur du cadre. on sait également que les roues libres de bicyclette de compétition se composent d'au moins six couronnes.

Ces bicyclettes présentent un certain nombre d'inconvénients:

– un écartement trop important de la fourche arrière de la bicyclette ce qui nuit aux qualités aérodynamiques.

– les tubes de la fourche arrière, partant de la noix du pédalier s'ouvrent suivant un angle accentué et sont de ce fait soumis à des efforts de flexion important. Pour fléchir le moins possible ces tubes sont de section relativement importante.

– les rayons de la roue arrière de la bicyclette sont disposés de manière dissymétrique par rapport au plan de la dite roue, en raison de la présence de la roue libre. Une telle configuration diminue la resistance des roues arriere; si bien que lors de certaines competitions on utilise des roues pleines dites roues lenticulaires pour pallier au manque de rigiditée de la roue a rayons dissymetrique.

Les inconvénients de ces roues dites roues lenticulaires réside dans leur très grande sensibilité au vent latéral et a leur poids

On sait également que les fourches avant et arrière des bicyclettes sont dotées à chaque extrémité de pattes dans chacune desquelles est ménagée une lumière qui reçoit en blocage le moyeu dela roue. Avec une telle configuration il ne peut être assuré un centrage précis des roues dans les fourches.

De plus les moyeux des roues avant et arrière se composent d'une partie tournante composée de deux flasques recevant les rayons et d'un axe fixe engagé dans la partie tournante.

Cet axe fixe est percé suivant sa longueur pour permettre le passage de l'axe de l'exentrique; par cet axe les roues sont fixées aux pattes des fourches de la bicyclette.

Ce genre de moyeu présente l'inconvénient d'être complexe.

Par le passé il a été conçu differentes applications, notamment un brevet US N° 2.018.973 (POMEROY deposé en 1935) et un brevet FR N° 1.388.952 (BURDINO déposé en 1963) dont les tubes des fourches se terminent par des cages.

Les cages decrites dans le brevet POMEROY sont tournées de maniere a ce que leur fond soit a proximite des flasques du moyeu, ces cages sont dotées d'une ouverture radiale a la dimension du diametre du moyeu.

Cette disposition présente un inconvénient, en effet, pour retirer ou mettre en place la roue, il est nécessaire de rapprocher angulairement les tubes de la fourche de manière à ce que les cages soient écartées des roulements.

Ce rapprochement angulaire des tubes n'est possible que dans la mesure ou les roulements sont écartés des flasques d'une valeur au moins égale à la profondeur des cages.

En raison de cet écart, la fourche au niveau des cages présente une largeur relativement importante préjudiciable aux qualités aérodynamiques et fonctionnelles de la bicyclette.

Les cages selon notre innovation peuvent être disposées en sorte que leur fond soit opposé aux flasques du moyeu, présentant un alésage borgne pour recevoir le roulement et une rainure radiale débouchant dans l'alésage présentant une largeur égale au diamètre extérieur du roulement.

De cette manière, les roulements du moyeu sont engagés radialement dans les cages et non axialement comme décrit dans le brevet POMEROY, le principe fonctionnel est différent. Une configuration des cages est possible selon notre innovation qui permet un montage et démontage très rapide des roues.

Le brevet BURDINO a également pour objet une bicyclette dont les tubes des fourches se terminent chacun par une cage qui reçoit en blocage les roulements du moyeu, la cage en forme de gousset est pourvue d'une mâchoire qui pivotant sur un axe vient emprisonner le roulement pour la fixation de la roue, un verouillage mécanique vient bloquer la mâchoire pivotante en position. La caractéristique principale c'est que la roue libre d'entrainement est montée mécaniquement solidaire du cadre, lors du montage de la roue arrière et après blocage de celle-ci, à l'aide d'une vis on actionne un déplacement latéral de la roue libre jusqu'à venir l'assembler au moyeu de la roue qui est munie d'une rainure pour recevoir les deux crabots d'entrainement de la roue libre.

Autre particularité du brevet BURDINO c'est l'interchangeabilité de la roue avant et de la roue arrière ceci étant possible du fait que la roue libre est fixée au cadre et non sur le moyeu. Ce système présentant un ensemble mécanique complexe, lent et peu rigide tant par la fixation des roues dans les cages a fermeture mécanique, que par la translation de la roue libre pour engrainer avec le moyeu de la roue.

Notre innovation a pour objet entre autres une roue arrière de bicyclette équipée d'un moyeu caractérisé en ce que le dit moyeu est constiué par un axe pourvu de deux flasques et d'une surlongueur pour recevoir la roue libre dentée extérieurement au cadre, le moyeu est porteur de la roue libre.

Lorsque l'on démonte la roue arrière la roue libre ou le moyen d'entrainement peut rester solidaire du moyeu de la roue.

Le cadre peut rester en attente avec ses deux cages vides.

La présente invention a pour objet de pailler des inconvénients précédemment énoncés.

La bicyclette selon la présente invention se caractérise essentiellement en ce que les couronnes de la roue libre de la roue arrière sont montées à l'extérieur du cadre.

Selon une autre caractéristique supplémentaire de l'invention, les tubes constituant la fourche arrière de la bicyclette sont disposés suivant deux plans parallèles, c'est-à-dire que les deux tubes partant de la noix du pédalier sont parallèles l'un à l'autre et que les tubes partant du collier support de selle sont parallèles l'un à l'autre à partir de l'entretoise porte frein.

Grace à une telle configuration les tubes de la fourche arrière sont moins soumis aux efforts de flexion dus aux efforts exercés par la chaine sur une des couronnes de la roue libre et peuvent être de section moindre.

Un autre avantage d'une telle configuration réside dans le fait que les rayons de la roue arrière de la bicyclette peuvent être disposés de manière symétrique par rapport au plan de la roue, ce qui accroit la rigidité de la dite roue arrière.

Selon une autre caractéristique supplémentaire des moyeux a blocage par empreintes, selon l'invention les moyeux des roues avant et arrière sont dotés de deux organes de roulement disposés de part et d'autre des flasques aux plus prés de ceux-ci et les fourches correspondante sont équipées de deux cages qui reçoivent en blocage les organes de roulement du moyeu.

Selon une autre caractéristique supplémentaire chaque cage présente coaxialement à l'axe de rotation de la roue, un logement ouvert vers l'intérieur du cadre dans lequel se monte l'organe de roulement correspondant,dotée d'un moyen de blocage de l'organe de roulement dans le logement et présente une rainure radiale au logement cette rainure débouchant dans le logement et en bordure de la dite cage, la largeur de la dite rainure étant au moins égale au diamètre extérieur de l'organe de roulement de façon à ce que ce dernier puisse être introduit radialement dans le logement par passage au travers de la rainure.

D'autres avantages et caractéristiques de l'invention apparaitront à la lecture de la description d'une forme préférentielle de réalisation donnée à titre d'exemple non limitatif en se référant aux dessins annexés en lesquels :

— la figure 1 est une vue shématique de dessus de la bicyclette selon l'invention.

— la figure 2 est une vue en coupe de la bicyclette au niveau du moyeu de la roue arrière.

— la figure 3 est une vue en coupe au niveau de la fourche arrière de la bicyclette montrant une autre forme de réalisation du moyeu.

— la figure 4 est une vue en vue en perspective du cadre de la bicyclette.

— la figure 5 est une vue en coupe au niveau de ta fourche avant de la bicyclette.

— la figure 6 est une vue en coupe de la fourche arrière d'une bicyclette équipée d'un moyeu a blocage par empreintes des cages et d'une roue libre à l'intérieur du cadre; une telle configuration ne comporte aucune partie de l'invention actuelle.

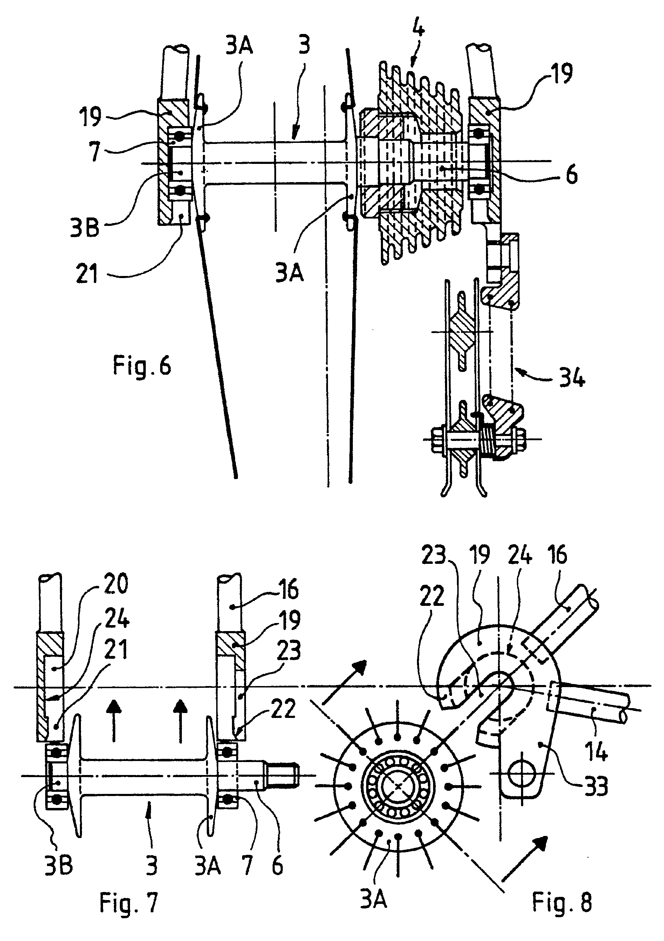

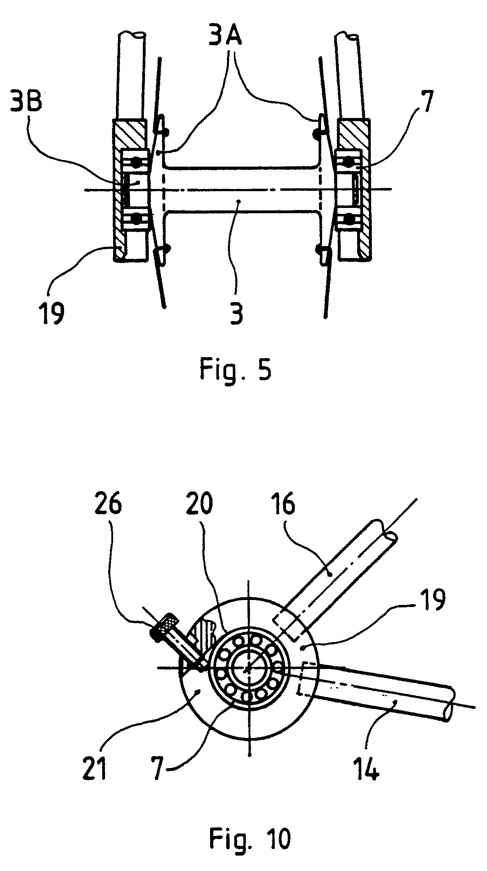

— le figure 7 est une vue montrant l'empreinte des cages qui emprisonne les roulements et le sens d'introduction du moyeu dans les cages de la fourche.

— la figure 8 est une vue de droite de la figure 7.

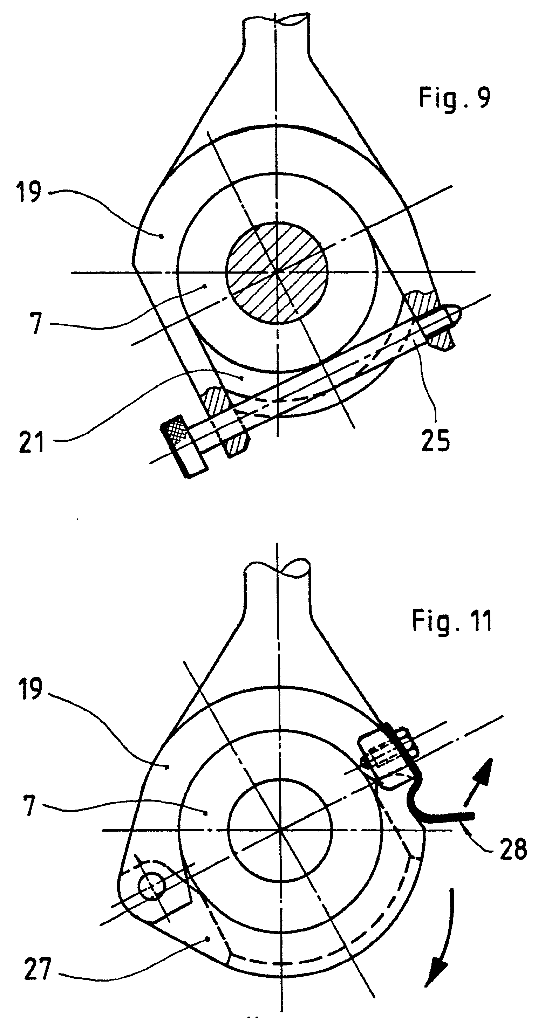

— les figures 9 10 et 11 montrent différentes formes de réalisation des moyens de blocage des organes de roulement dans le logement de chaque cage.

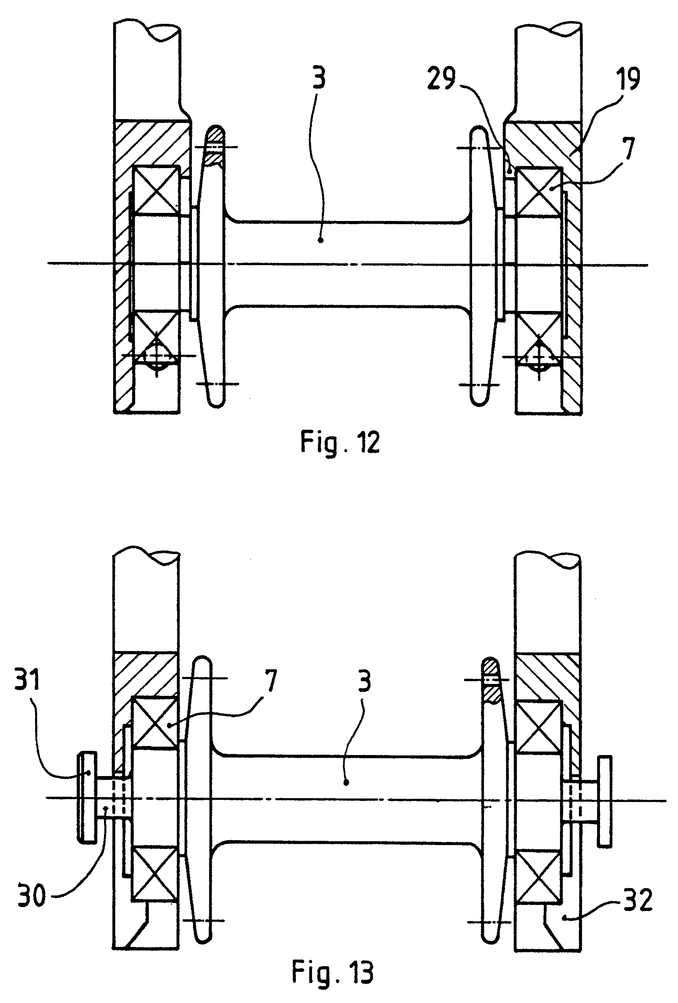

— les figures 12 et 13 montrent des moyens s'opposant au déplacement axial des cages par rapport aux roulements.

Telle que représentée la bicyclette selon l'invention comporte un cadre 1, une roue avant 2A, une roue arrière 2B dont le moyeu 3 est doté de deux flasques 3A recevant les rayons et reçoit un dispositif de roue libre 4 constitué notamment par des couronnes dentées 5 et par un mécanisme d'encliquetage 4A

Conformément à l'invention les couronnes dentées 5 du dispositif de roue libre 4 sont montées à l'extérieur du cadre de la bicyclette.

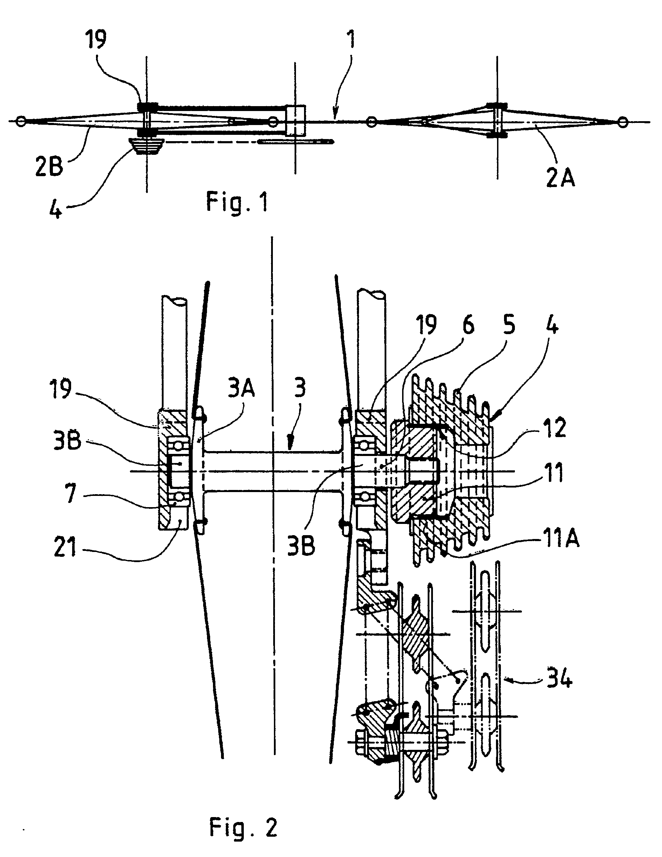

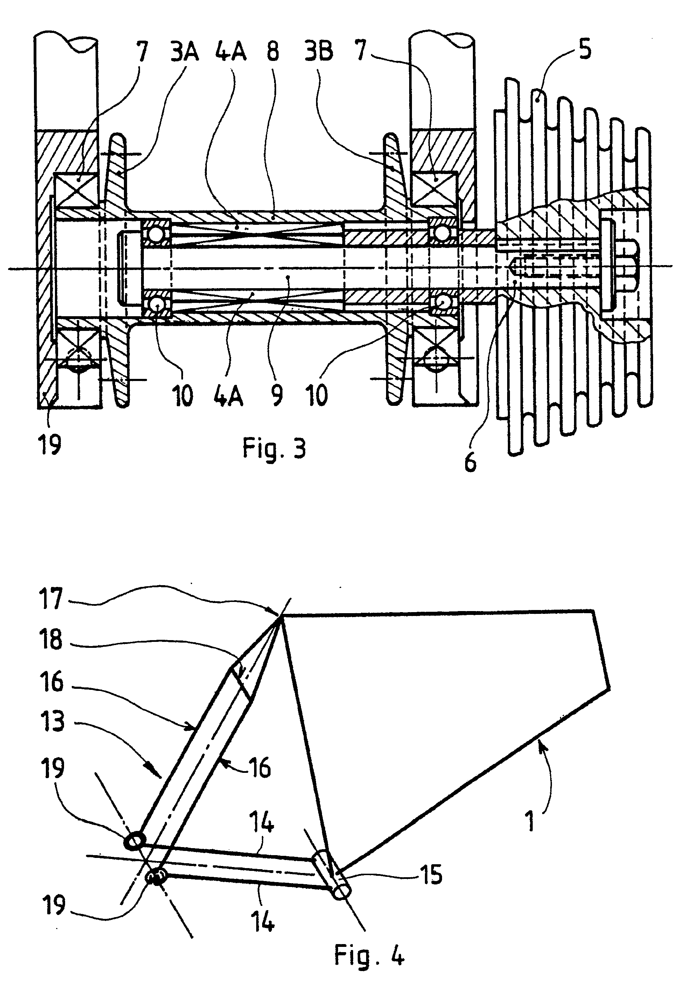

Selon une première forme de réalisation (figure2) l'ensemble du dispositif de roue libre 4 est monté à l'extérieur du cadre sur le moyeu tandis que suivant une seconde forme de réalisation (fig.3) seule les couronnes 5 sont extérieures au cadre, le mécanisme d'encliquetage du dispositif de roue libre étant logé à l'intérieur du cadre par exemple dans le moyeu.

Suivant ces deux formes de réalisation le moyeu présente de part et d'autre des flasques 3A au plus prés de ceux-ci deux organes de roulement 7 qui coopèrent en blocage avec la fourche arrière de la bicyclette. Pour recevoir les organes de roulement le moyeu 3A présente deux portées 3B.

Selon la première forme de réalisation (figure 2) le moyeu 3 de la roue arrière est monobloc et est constitué par un axe équipé des flasques 3A et présente extérieurement au cadre de la bicyclette une surlongueur 6 à laquelle est fixée le dispositif de roue libre.

La surlongueur est ménagée au delà d'une des portées 3B du moyeu. Selon la forme préférentielle de réalisation la surlongueur 6 reçoit un nez adaptateur 11 ou entretoise sur lequel est vissé le dispositif de roue libre (fig.2). Ce nez adaptateur de forme générale cyclindrique est doté suivant son axe d'un taraudage pour être vissé sur l'extrémité filetée de la surlongueur 6. De plus le nez adaptateur présente une portée filetée 11A sur laquelle est vissé le dis-

positif de roue libre qui présente à cet effet un orifice taraudé 12. Le nez adaptateur 11 permet le montage sur le moyeu 3 de dispositifs de roue libre du commerce, le diamètre de l'orifice 12 ainsi que le pas étant normalisés.

Suivant la seconde forme de réalisation (fig.3) le moyeu 3 de la roue arrière est constitué par un élément tubulaire 8 cylindrique doté des deux flasques 3A et des organes de roulement 7 et par un arbre 9 monté dans l'élément tubulaire et coopérant avec ce dernier par l'intermédiaire du mécanisme de t'encliquetage 4A (représenté shématiquement) du dispositif de roue libre. Selon cette forme de réalisation l'arbre est prolongé axialement, extérieurement au cadre et à l'élément tubulaire par la surlongueur 6 qui reçoit en fixation les couronnes dentées 5.

Selon la forme de réalisation représentée en figure 3, l'arbre 9 est porté dans l'élément tubulaire 8 par deux roulements 10. Le mécanisme d'encliquetage 4A connu en soi est disposé autour de l'arbre 9 entre les roulements 10.

Le cadre 1 d'une bicyclette dotée d'un dispositif de roue libre monté à l'extérieur est avantageusement doté d'une fourche arrière (13) dont les tubes sont disposés suivant deux plans parallèles, c'est-à-dire que les deux tubes 14 partant de la noix 15 du pédalier sont parallèles t'un à l'autre et que les deux tubes 16 partant du collier 17 support de selle sont parallèle l'un à l'autre à partir de l'entretoise 18 porte frein, chaque tube 14 étant raccordé à un tube 16.
Comme le dispositif de roue libre est monté à l'extérieur du cadre 1, la fourche arrière de ce dernier pourra être étroite ce qui améliorera les qualités aérodynamiques.

De plus les tubes 14 de la fourche arrière sont moins soumis aux effets des efforts de flexion et peuvent de ce fait être de section moindre ce qui réduit le poids de la bicyclette.

Pour recevoir en blocage le moyeu de la roue arrière, la fourche arrière de la bicyclette est équipée de deux cages 19 dans chacune desquelles se bloque un des organes de roulement 7.

Avantageusement comme on peut le voir en figure 5 la fourche avant de la bicyclette est également équipée de deux cages 19 le moyeu de la roue avant 2A de part et d'autre des flasques 3A, étant également équipé d'organes de roulement 7.

Les cages 19 décrites plus avant pourront être également montées sur la fourche arrière d'une bicyclette recevant le dispositif de roue libre à 'intérieur du cadre.
Une telle configuration est représenté en figure 6, mais ne comporte aucune partie de l'invention actuelle.

Sur cette figure on peut voir que le moyeu 3 est monobloc et est également constitué par un axe 3 équipé de deux flasques 3A. Ce moyeu est équipé également d'une surlongueur 6 pour recevoir le dispositif de roue libre 4 à l'intérieur du cadre. A chaque extrémité, ce moyeu présente deux portées de roulement 7. Ces roulements s'engagent dans les cages 19 de la fourche arrière.

Les cages 19 de la fourche arrière d'une bicyclette sont chacune fixée en extrémité d'un tube 16 et d'un tube 14. Les cages 19 équipant la fourche avant sont chacune fixée en extrémité d'un des tubes constituant cette fourche.

Chaque cage 19 constituée par exemple par une paroi en forme de disque présente coaxialement à l'axe de rotation de la roue un logement 20 ouvert vers l'intérieur du cadre dans lequel se monte l'organe de roulement 7 correspondant, est dotée d'un moyen de blocage de l'organe de roulement 7 dans le logement 20 et présente une rainure 21 radiale au logement 20 débouchant dans ce dernier et en bordure périphérique, la largeur de cette rainure étant au moins égale au diamètre extérieur de l'organe de roulement 7 de façon à ce que ce dernier puisse être introduit radialement dans le logement 20 par passage au travers de la rainure 21.

Avantageusement la rainure 21 au niveau de la rive périphérique de la cage présente des chanfreins 22 pour faciliter l'introduction des organes de roulement 7.

Il est bien évident que la dite rainure 21 est orientée vers le sol c'est-à-dire se développe sous le logement 20.

Les rainures 21 des cages 19 de la fourche arrière sont orientées de plus vers l'arrière de la bicyclette de manière en ce que sous l'effet conjugué du poids du cycliste et de l'effort de traction de la chaine sur le moyeu, le blocage des organes de roulement dans leur logement 20 soit renforcé.

La rainure 21 de chaque cage 19 de la fourche avant se développe sous le logement 20 et est orientée vers le sol et légèrement vers l'avant de la bicyclette toujours pour renforcer le blocage des roulements dans les cages.

Afin de permettre le passage de la surlongueur 6 d'un moyeu portant les couronnes dentées 5 extérieurement au cadre, la cage 19 disposée à proximité de ces couronnes, présente une fente 23 ménagée dans le fond de la rainure 21 et du logement 20. Cette fente présente une largeur égale ou supérieure au diamètre de la surlongueur 6.

Selon la forme préférentielle de réalisation le logement 20 de chaque cage 19 est constitué par un alésage de diamètre égal au diamètre extérieur de l'organe de roulement 7 et la largeur de la rainure 21 est égale au diamètre de l'alésage.

Selon une première forme de réalisation le moyen de blocage des organes de roulement 7 dans leurs cage 19, est constitué par une empreinte cylindrique 24 de diamètre égal au diamètre extérieur du roulement 7 ménagée coaxialement à l'alésage 20 dans le fond de ce dernier, la dite empreinte étant de plus de faible profondeur par exemple 1mm et étant destinée à recevoir le roulement.

La distance normale entre les deux fonds des rainures 14 des cages 19 d'une même fourche est inférieure à la distance hors roulement 7 du moyeu correspondant.

Par distance hors roulement on entend la distance normale mesurée entre les roulements 7 augmentée de l'épaisseur de ceux-ci.

De plus la distance normale entre les deux fonds des empreintes 24 des cages 19 d'une même fourche est égal à la distance hors roulement.

Ces caractéristiques techniques en combinaison avec l'élasticité naturelle des tubes constituant les fourches de la bicyclette permettent un blocage du moyeu dans les cages 19.

Plus précisément le moyeu, par les organes de roulement 7 se trouve pincé dans les empreintes 24 des cages 19.

De plus une telle configuration assure un centrage rigoureux de chaque roue dans la fourche correspondante.

De préférence pour faciliter l'extraction de la roue, le fond de la rainure 21 présente un chanfrein au niveau de l'empreinte 24

Suivant une autre forme de réalisation (fig.9) le moyen de blocage du roulement dans le logement 20 est constiué par une goupille amovible 25 disposée transversalement dans la rainure 21 parallélement au fond de cette dernière.

Cette goupille 25 s'engage par ses extrémités dans deux orifices pratiqués dans la gage 19.

Selon une forme de réalisation représenté en figure 9 on remarque que la goupille 25 est constituée par une vis. Il est bien évident que cette goupille pourra être constituée par tout autre organe adapté.

Suivant une autre forme de réalisation (figure 10) le moyen de blocage du roulement dans le logement 20 de la cage est constitué par une vis pression 26 engagée dans un orifice taraudé dont l'axe est parallèle au fond du logement 20. Cet orifice débouche dans le dit logement.

La vis pression 26 est amenée en pression contre le roulement 7.

Suivant une forme de réalisation (figure 11) le moyen de blocage du roulement dans le logement 20 est constitué par une bride 27, conformée en un arc de circonférence, amenée en appui contre le roulement 7. Cette bride en combinaison avec le logement 20 de la cage 19 délimite un espace cyclindrique dans lequel est emprisonné le roulement.

Telle que représenté en figure 11 la bride est articulée par ses extrémités à la cage 19 et coopère par son autre extrémité avec un organe élastique 28 par exemple un clip qui la maintien en appui contre le roulement.

Pour éviter que les cages 19 d'une même fourche s'écartent l'une de l'autre accidentellement alors que les roulements 7 du moyeu sont en place dans leur logement respectif chaque cage 19 est équipée d'une butée 29 qui s'oppose au mouvement axial du roulement par rapport à son logement (figure 12).

A cet effet la butée 29 est ménagé sur le côté de la cage en regard du flasques 3A, est disposée en regard du logement 20 et est écartée du fond du logement d'une valeur égale ou légèrement supérieure à l'épaisseur du roulement. Cette butée en venant en appui contre le roulement 7 s'oppose à l'écartement des cages 19 tant que la roue est en place dans la fourche.

Suivant une autre forme de réalisation (figure 13) le moyeu de la roue avant et le moyeu de la roue arrière sont équipé d'un moyen s'opposant à un déplacement axial trop important des cages par rapport au roulement.

Selon cette forme de réalisation les moyeux sont prolongés à au moins une de leur extrémité par une portion cylindrique 30, de plus faible diamètre que l'axe les composant, terminée par un bouton cylindrique (31), le diamètre de ce bouton étant plus grand que celui de la dite portion.

La cage 19 correspondante est dotée d'une fente 32 pratiquée dans le fond de la rainure 21 et dans le fond du logement 20. Dans cette fente s'engage la portion cylindrique 30.

La largeur de cette fente est très légèrement supérieure au diamètre de la portion cylindrique 30 et est inférieure au diamètre du bouton 31.

Il est à noter que le bouton 31 est écarté de la cage pour éviter tout problème de frottement. Il est à noter également que le bouton 31 permet de faciliter le démontage de la roue.

De telles caractéristiques sont reproduites sur chaque cage 19 de la fourche avant et à chaque extrémité du moyeu de la roue avant.

Ces caractéristiques sont également reproduites sur l'extrémité du moyeu arrière opposée au dispositif de roue libre et sur la cage 19 opposée à ce dispositif de roue libre.

Dans la configuration de la figure 6 suivant laquelle le moyeu porte la roue libre à l'intérieur du cadre les caractéristiques techniques seront également reproduites sur l'extrémité du moyeu et sur la cage disposées du côté de la roue libre 4.

La configuration de la figure 6 ne comporte aucune partie de l'invention actuelle.

De préférence la cage 19 qui est du côté des couronnes 5 est dotée d'une patte 33 de fixation du dérailleur 34.

## Revendications

1. Bicyclette à blocage des roues par empreintes avec roue-libre extérieure au cadre caractérisée en ce que les couronnes dentées (5) du dispositif de roue libre (4) porté par le moyeu (3) de la roue arrière (2 B) sont montées à l'extérieur du cadre (1).

2. Bicyclette avec roue libre exterieure au cadre selon la revendication 1 caractérisée en ce que le moyeu (3) présente une surlongueur (6) pour recevoir à l'extérieur du cadre de la bicyclette les couronnes dentées (5) du dispositif de roue libre (4)

3. Bicyclette à blocage des roues par empreintes avec roue-libre extérieure au cadre selon les revendications 1 et 2 caractérisée en ce que l'ensemble du dispositif de roue libre (4) c'est-à-dire couronnes dentées (5) et système d'encliquetage (4 A) est monté à l'extérieur du cadre sur la surlongueur (6) du moyeu (3).

4. Bicyclette à blocage des roues par empreintes avec roue-libre extérieure au cadre selon la revendication 1 comportant un dispositif de roue libre (4) constitué notament par des couronnes dentées (5) et par un système d'encliquetage (4 A) caractérisée en ce que les couronnes dentées (5) sont montées sur la surlongueur (6) à l'extérieur du cadre tandis que le mécanisme d'encliquetage (4 A) est monté à l'intérieur du cadre (1), dans le moyeu (3).

5. Bicyclette selon la revendication 2 dont le moyeu présente une surlongueur (6) pour recevoir les couronnes dentées (5) à l'extérieur du cadre, le dit moyeu étant par ailleurs équipé de deux flasques (3 A) pour recevoir les rayons de la roue caractérisée par deux organes de roulement (7) montés de part et d'autre des flasques (3 A) au plus près de ceux-ci qui coopérent en blocage avec la fourche arrière de la bicyclette.

6. Bicyclette à blocage des roues par empreintes avec roue-libre extérieure au cadre selon la revendication 4 dont les couronnes dentées (5) sont à l'extérieur du cadre et dont le système d'encliquetage est a l'intérieur du cadre dans le moyeu caractérisé en ce que le dit moyeu est constitué par un élément tubulaire (8) cyclindrique, doté de deux flasques (3 A) et des organes de roulement (7), et par un arbre (9) monté dans l'élément tubulaire et coopérant avec ce dernier par l'intermédiaire du mécanisme d'encliquetage (4 A), le dit arbre (9) étant équipé extérieurement au cadre (1) et extérieurement à l'élément tubulaire de la surlongueur (6).

7. Bicyclette à blocage des roues par empreintes avec roue-libre extérieure au cadre selon la revendication 5 dont les couronnes dentées (5) du dispositif de roue libre sont à l'extérieur du cadre (1) et dont la fourche arrière (13) est constituée par deux tubes (14) partant de la noix (15) du pédalier et par deux tubes (16) partant du collier (17) support de selle caractérisée en ce que les tubes (14) sont parallèles l'un à l'autre et que les tubes (16) à partir de l'entretoise (18) porte frein sont paralléles l'un à l'autre.

8. Bicyclette à blocage des roues par empreintes avec roue-libre extérieure au cadre selon la revendication 5 dont le moyeu de la roue arrière est équipé de deux organes de roulement (7) caractérisée en ce que la fourche arrière de la bicyclette est équipée de deux cages (19) dans chacune desquelles se bloque un des organes de roulement (7).

9. Bicyclette à blocage des roues par empreintes avec roue-libre extérieure au cadre selon la revendication 8 comportant des cages (19) caractérisée en ce que chaque dite cage présente, coaxialement à l'axe de rotation de la roue un logement(20) ouvert vers l'intérieur du cadre, dans lequel se monte l'organe de roulement (7) correspondant, que la dite cage est dotée d'un moyen de blocage de l'organe de roulement (7) dans le logement (20), que cette rainure débouche dans le logement 20 et sur la rive périphérique de la dite cage, et que la largeur de la dite rainure est au moins égale au diamètre extérieur de l'organe de roulement de façon à ce que ce dernier puisse être introduit radialement dans le logement (20) par passage au travers de la rainure 21.

10. Bicyclette à blocage des roues par empreintes avec roue libre extérieure au cadre comportant des cages (19) selon la revendication 9 caractérisée en ce que les dites cages (19) équipent également la fourche avant de la bicyclette, le moyeu de la roue avant étant constitué d'un axe (3) comportant deux flasques (3 A) et de deux organes de roulement (7) de part et d'autre des flasques.

11. Bicyclette à blocage des roues par empreintes avec roue-libre extérieure au cadre selon la revendication 9 dont les couronnes dentées (5) du dispositif de roue libre sont portées à l'extérieur du cadre (1) par une surlongueur (6) du moyeu et dont la fourche arrière présente deux cages (19) caractérisée en ce que la cage (19) disposée à proximité des couronnes présente une fente (23) ménagée dans le fond de la rainure (21) et du logement(20) et que cette fente est au moins égale au diamètre de la surlongueur (6).

12. Bicyclette à blocage des roues par empreintes selon les revendications 9, 10 caractérisée en ce que le logement (20) de chaque cage (19) est constitué par un alésage dont le diamètre est égal au diamètre extérieur du roulement (7) et que la largeur de la rainure (21) est égale au diamètre de l'alésage.

13. Bicyclette à blocage des roues par empreintes selon les revendications 9 dont chaque cage (19) comporte des moyens de blocage du roulement (7) dans le logement (20) caractérisée en ce que le dit moyen est constitué par une empreinte cyclindrique (24) de diamètre égal au diamètre extérieur du roulement, ménagée coaxialement à l'alésage (20) dans le fond de ce dernier, que la distance normale entre les deux fonds des rainures (21) des cages (19) d'une même fourche est inférieure à la distance hors roulement du moyeu correspondant et que la distance entre le fond des empreintes (24) est égale à la distance hors roulement.

14. Bicyclette selon les revendications 9, 10 dont chaque cage comporte un moyen de blocage du roulement dans le logement caractérisée en ce que le dit moyen est constitué par une goupille amovible (25) disposée transversallement dans la rainure (21) parallèlement au fond de cette dernière.

15. Bicyclette selon les revendications 9, 10 dont chaque cage (19) comporte un moyen de blocage du roulement (7) dans le logement (20) caractérisée en ce que le dit moyen est constitué par une vis pression (26) engagée dans un orifice taraudé débouchant dans le logement (20), la vis pression étant amenée en pression contre le roulement (7).

16. Bicyclette selon les revendications 9, 10 caractérisée en ce que chaque cage est équipée en regard du logement (20), d'une butée (29) espacée du fond du dit logement d'une valeur égale à l'épaisseur du roulement (7) afin de s'opposer au mouvement axial du roulement par rapport au dit logement.

17. Bicyclette à blocage des roues par empreintes avec roue-libre exterieure au cadre selon les revendications 1 à 4, 9, 10 et 11 caractérisée en ce que le moyeu est doté de moyens s'opposant à un déplacement axial trop important des cages par rapport au roulement (7).

18. Bicyclette selon la revendication 17 caractérisée en ce que les moyeux sont prolongés à au moins une de leur extrémité par une portion cyclindrique (30) teminée par un bouton cyclindrique (31) de diamètre plus important et que la cage (19) correspondante est dotée d'une fente (32) pratiquée dans le fond de la rainure (21) et dans le fond du logement (20), la largeur de cette fente étant supérieure au diamètre de la portion (30) et inférieure au diamètre du bouton (31).

**Patentansprüche**

1. Fahrrad mit Einrasthalterung der Räder und einem ausserhalb des Rahmens befindlichen Zahnradsatz. Die ausserhalb des Rahmens (1) befindlichen Zahnringe (5) des Zahnradsatzes (4) werden von der Nabe (3) des Hinterrades (2 B) getragen.

2. Fahrrad mit ausserhalb des Rahmens befindlichen Zahnradsatz, entsprechend der Eigenschaft 1. Die Nabe (3) hat eine Überlänge (6), um die ausserhalb des Fahrradrahmens befindlichen Zahnringe (5) des Zahnradsatzes (4) aufzunehmen.

3. Fahrrad mit Einrasthalterung der Räder und einem ausserhalb des Rahmens befindlichen Zahnradsatz, entsprechend den Eigenschaften 1 und 2. Der gesamte Zahnradsatz (4), d.h. die Zahnringe (5) und das Sperrklinkensystem (4 A), ist ausserhalb des Rahmens auf der Überlänge (6) der Nabe (3) montiert.

4. Fahrrad mit Einrasthalterung der Räder und einem ausserhalb des Rahmens befindlichen Zahnradsatz, entsprechend der Eigenschaft 1, bestehend aus einem Zahnradsatz (4), der insbesonders aus den Zahnringen (5) und einem Sperrklinkensystem (4 A) zusammengesetzt ist. Die Zahnringe (5) sind auf der Überlänge (6) ausserhalb des Rähmens montiert, während der Sperrklinkenmechanismus (4 A) innerhalb des Rahmens (1) in der Nabe (3) montiert ist.

5. Fahrrad entsprechend der Eigenschaft 2, dessen Achse eine Überlänge (6) hat, um die Zahnringe (5) ausserhalb des Rahmens aufnehmen zu können. Die Nabe ist mit zwei Speichenträgern (3A) versehen, die die Speichen des Rades aufnehmen. Zwei Kugellager (7) sind beiderseits nahe der Speichenträger (3 A) montiert, was zusammen mit der Hintergabel des Fahrrades als Halterung dient.

6. Fahrrad mit Einrasthalterung der Räder und einem ausserhalb des Rahmens befindlichen Zahnradsatz, entsprechend der Eigenschaft 4, dessen Zahnringe (5) sich ausserhalb des Rahmens befinden und dessen Sperrklinkensystem innerhalb des Rahmens in der Nabe montiert ist. Die Nabe besteht aus einem zylindrischen Rohrelement (8), das mit zwei Speichenträgern (3 A), den Kugellagern (7) und einer in dem Rohrelement montierter Achse (9) versehen ist. Das Zusammenwirken geschieht mit Hilfe des Sperrklinkenmechanismus (4 A). Die Achse (9) wird ausserhalb des Rahmens (1) und ausserhalb des Rohrelementes mit Überlänge (6) bestückt.

7. Fahrrad mit Einrasthalterung der Räder und einem ausserhalb des Rahmens befindlichen Zahnradsatz, entsprechend der Eigenschaft 5. Die Zahnringe (5) des Zahnradsatzes sind ausserhalb des Rahmens (1). Die Hintergabel (13) besteht aus zwei Rohren (14), die von dem Pedalengehäuse (15) ausgehen, und aus zwei Rohren (16), die von der Rohrschelle (17) der Sattelbefestigung ausgehen. Die Rohre (14) sind einander parallel und die Rohre (16) sind von dem Zwischenrohr (18) der Bremsenbefestigung aus einander parallel.

8. Fahrrad mit Einrasthalterung der Räder und einem ausserhalb des Rahmens befindlichen Zahnradsatz, entsprechend der Eigenschaft 5. Die Nabe des Hinterrades ist mit zwei Kugellagerelementen (7) ausgerüstet. Die Hintergabel des Fahrrades ist mit zwei Gehäusen (19) versehen in denen die beiden Kugellagerelementen (7) eingesetzt sind.

9. Fahrrad mit Einrasthalterung der Räder und einem ausserhalb des Rahmens befindlichen Zahnradsatz, entsprechend der Eigenschaft 8. Am Rahmen befinden sich die Gehäuse (19). Jedes Gehäuse besitzt einen koaxial mit der Rotationsachse des Rades verlaufenden Sitz (20), der innerhalb des Rahmens offen ist. In diesen Sitz (20) wird das entsprechende Kugellagerelement (7) eingesetzt. Das Gehäuse ermöglicht das Befestigen des Kugellagerelements (7) im Sitz (20). Ein Ausschnitt führt zum Sitz (20) und zur Aussenkante des Gehäuses. Der Ausschnitt ist mindestens gleich weit dem Aussendurchmesser des Kugellagerelements, so dass das Kugellager radial durch den Ausschnitt (21) in den Sitz (20) eingeführt werden kann.

10. Fahrrad mit Einrasthalterung der Räder und einem ausserhalb des Rahmens befindlichen Zahnradsatz. Am Rahmen befinden sich die Gehäuse (19), entsprechnend der Eigenschaft 9. Die Vordergabel des Fahrrades ist ebenfalls mit den Gehäusen (19) versehen. Die Nabe des Vorderrades besteht aus einer Achse (3), die mit zwei Speichenträgern (3 A) und mit zwei Kugellagerelementen (7) beiderseits den Speicherträgern bestückt ist.

11. Fahrrad mit Einrasthalterung der Räder und einem ausserhalb des Rahmens befindlichen Zahnradsatz, entsprechend der Eigenschaft 9. Die Zahnringe (5) des Zahnradsatzes sind an der Überlänge (6) der Nabe ausserhalb des Rahmens (1) angebracht. Die Hintergabel hat zwei Gehäuse (19). Die Gehäuse befinden sich nahe der Zahnringe und haben eine Ausfräsung (23), die in dem Ausschnitt (21) und in dem Sitz (20) eingearbeitet ist. Die Weite der Ausfräsung ist mindestens gleich dem Durchmesser der Überlänge (6).

12. Fahrrad mit Einrasthalterung, entsprechend den Eigenschaften 9 und 10. Der Sitz (20) jedes Gehäuses (19) besteht aus einer Bohrung. Der Durchmesser der Bohrung ist gleich dem Aussendurchmesser des Kugellagers (7) und die Breite des Ausschnittes (21) ist gleich dem Bohrdurchmesser.

13. Fahrrad mit Einrasthalterung, entsprechend der Eigenschaft 9. Jedes Gehäuse (19) hat eine Einrastmöglichkeit für das Kugellager (7) im Sitz (20). Die Einrastmöglichkeit besteht aus einer zylindrischen Vertiefung (24) mit einem Durchmesser gleich dem Aussendurchmesser des Kugellagers. Die Vertiefung befindet sich koaxial im Boden des Sitzes (20). Die normale Weite zwischen den beiden Ausschnitten (21) in den Gehäusen (19) der Gabel ist kleiner als die Aussenweite der Kugellager der entsprechenden Nabe. Die Weite zwischen den Vertiefungen (24) ist gleich der Aussenweite der Kugellager.

14. Fahrrad, entsprechend den Eigenschaften 9 und 10. Jedes Gehäuse hat eine Sperrmöglichkeit des Kugellagers im Sitz. Die Möglichkeit besteht aus einem beweglichen Stift (25), der quer zum Ausschnitt (21) und parallel dessen tiefe verläuft.

15.Fahrrad, entsprechend den Eigenschaften 9 und 10. Jedes Gehäuse (19) enthält eine Befestigungsmöglichkeit für das Kugellager (7) im Sitz (20). Die Möglichkeit besteht aus einer Stellschraube (26), die durch eine Gewindebohrung den Sitz (20) erreicht. Die Stellschraube übt einen Druck auf das Kugellager (7) aus.

16. Fahrrad, entsprechend den Eigenschaften 9 und 10. Jedes Gehäuse hat im Sitz einen Anschlag (29), der einen Zwischenraum im Boden des Sitzes lässt. Der Zwischenraum ist gleich der Stärke des Kugellagers (7), um der Axialbewegung des Kugellagers im Sitz entgegenzuwirken.

17. Fahrrad mit Einrasthalterung und ausserhalb des Rahmens befindlichen Zahnradsatz, entsprechend den Eigenschaften 1 bis 4, 9 und 10. Die Nabe ist mit einer Möglichkeit versehen, um einer zu grossen Axialbewegung auf das Kugellager (7) entgegenzuwirken.

18. Fahrrad, entsprechend der Eigenschaft 17. Die Naben sind mindestens an einem Ende mit einem zylindrischen Teil (30) verlängert, das mit einem grösseren zylindrischen Knopf (31) endet. Das korrespondierende Gehäuse (19) ist mit einem Schlitz (32) versehen, der in dem Ausschnitt (21) und in dem Boden des Sitzes (20) gearbeitet ist. Die Weite des Schlitzes ist grösser als der Durchmesser des Teiles (30) und kleiner als der Durchmesser des Knopfes (31).

## Claims

1. Bicycle with imprinted wheel lockings, with the freewheel outside the frame, characterized by the fact that the gear cluster (5) of the freewheel system (4), attached to the rear wheel (2B) hub (3), is mounted outside the frame (1).

2. Bicycle with the freewheel outside the frame in accordance with claim 1, characterized by the fact that the hub (3) has an extension (6) accomodating the gear cluster (5) of the freewheel system (4) outside the bicycle frame.

3. Bicycle with imprinted wheel lockings, with the freewheel outside the frame, in accordance with claims 1 and 2, characterized by the fact that the entire freewheel system (4), i.e. the gear cluster (5) and the ratchet system (4A), is attached outside the frame on an extension (6) of the hub (3).

4. Bicycle with imprinted wheel lockings, with the freewheel outside the frame, in accordance with claim 1. The freewheel system (4) is made up of, in particular, a gear cluster (5) and a ratchet system (4A). These are characterized by the fact that the gear cluster (5) is mounted on the outside of the frame and the ratchet mechanism (4A) is mounted on the inside of the frame (1), in the hub (3).

5. Bicycle in accordance with claim 2, whose hub has an extension (6) to accomodate the gear cluster (5) outside the frame. Moreover, the hub is equipped with two wheel discs (3A) which receive the wheel spokes and is characterized by two bearing systems (7) mounted next to the wheel discs (3A), en each side. These work with the rear forks in locking the bicycle wheel.

6. Bicycle with imprinted wheel lockings, with the freewheel outside the frame, in accordance with claim 4, whose gear cluster (5) is outside the frame and whose ratchet system is inside the frame in the hub. It is characterized by the fact that the hub is made up of a cylindrical tubular component (8), with two wheel discs (3A) and bearing systems (7), and that a shaft (9) is mounted inside the tubular component, working with it via the ratchet mechanism (4A). This shaft is fitted out on the outside of the frame (1) and outside the tubular component of the extension (6).

7. Bicycle with imprinted wheel lockings, with the freewheel outsidethe frame, in accordance with claim 5, whose freewheel system's gear cluster (5) is outside the frame (1). Its rear forks (13) are made up of two tubes (14) wich come from the crank axie (15) and two tubes (16) which come from the seat tube (17). It is characterized by the fact that the tubes (14) are parallel to each other and the tubes (16) are parallel to each other after the brake mounting plate (18)

8. Bicycle imprinted wheel lockings, with the freewheel outside the frame, in accordance with claim 5, whose rear wheel hub is equipped with two bearing systems (7). It is characterized by the fact that the rear forks are equipped with two casings (19) into each of which a bearing system (7) is locked.

9. Bicycle with imprinted wheel lockings, with the freewheel outside the frame, in accordance with claim 8, with casings (19). It is characterized by the fact that each casings has, coaxially to the wheel's axis of rotation, a housing (20) which is open in the direction of the inside of the frame and into which the corresponding bearing system (7) is mounted. The casing has a system for locking the bearing system (7) into the housing (20). This groove opens into the housing 20 and onto the outer edge of the casing. The width of this groove is at least equal to the external diameter of the bearing system so that this system may be inserted radially into the housing (20) via the groove 21.

10. Bicycle with imprinted wheel lockings, with the free wheel outside the frame, including casings (19) in accordance with claim 9. It is characterized by the fact that these casings (19) also fit the front forks of the bicycle, the hub of the front wheel being made up of an axie (3) with two wheel discs (3A) and two bearing systems (7), one on each side of the wheel discs.

11. Bicycle with imprinted wheel lockings, with the freewheel outside the frame, in accordance with claim 9, whose freewheel system's gear cluster (5) is set on the outside of the frame (1) on an extension (6) of the hub, and whose rear forks have two casings (19). It is characterized by the fact that the casings (19) located next to the gear cluster (5) has a slot (23) on the end of groove (21) and the housing (20). The diameter of this slot is at least equal to the diameter of the extension (6).

12. Bicycle with imprinted wheel lockings in accordance with claims 9 and 10, characterized by the fact that the housing (20) of each casing (19) has bore hole whose diameter is equal to the external diameter of the bearing (7). The width of the groove (21) is equal to the diameteroof the bore hole.

13. Bicycle with imprinted wheel lockings in accordance with claim 9, each casing (19) containing a system for locking the bearing system (7) into the housing (20). It is characterized by the fact that this system is made up of a cyclindrical imprint (24) whose diameter is equal to the external diameter of the bearing system. It is situated coaxially to the bore hole (20) at the bottom of this hole.The normal distance between the ends of the two grooves (21) in the casings (19) of a given fork is less than the distance external of the bearing of the corresponding hub. The distance between the bottom of the imprints (24) is equal to the distance external of the bearings.

14. Bicycle in accordance with claims 9 and 10, each casing of which contains a system for locking the bearing system into the housing. It is characterized by the fact that this locking system is made up of a movable pin (25) installed transversally in the groove (21), parallel to the end of the groove.

15. Bicycle in accordance with claims 9 and 10, each casing (19) of which contains a system for locking the bearing system (7) into the housing (20). It is characterized by the fact that this locking system is made up of a press-screw (26) insert into a threaded hole opening out into the housing (20). This press-screw is pressed up against the bearing system (7).

16. Bicycle in accordance with claims 9 and 10, characterized by the fact that each casing has a stop (29) in front of the housing (20). This stop is at a distance from the bottom of the housing that is equal to the width of the bearing system (7), in order to block axial movement in relation to the housing.

17. Bicycle with imprinted wheel lockings, with the freewheel outside the frame, in accordance with claims 1 through 4, 9 and 10. It is characterized by the fact that the hub has a system for blocking any excessive axial movement of the casings in relation to the bearing system (7).

18. Bicycle in accordance with claim 17, characterized by the fact that the hubs are extended on at least one end by a cylindrical section (30) ending in a cylindrical stud (31) with a larger diameter. The corresponding casing (19) has a slot (32) at the end of the groove (21) and the housing (20). The width of this slot is larger than the diameter of the section (30) and smaller than the diameter of the stud (31).

Fig. 1

Fig. 2

7  3A  4A  8  3B  7  5

10  4A  9  10

19

Fig. 3

6

17

18

16

13

19

16

14

1

19

14

15

14

Fig. 4

Fig.6

Fig. 7

Fig. 8

3A

3B

7

19

3

Fig. 5

26   20   16

19

21   7   14

Fig. 10

Fig . 9

19

7

21

25

Fig . 11

19

7

28

27

14

Fig. 12

Fig. 13